**Europäisches Patentamt**

**European Patent Office**

**Office européen des brevets**

(19)

(11) Veröffentlichungsnummer : **0 349 826 B1**

## (12) EUROPÄISCHE PATENTSCHRIFT

(45) Veröffentlichungstag der Patentschrift :
**27.05.92 Patentblatt 92/22**

(51) Int. Cl.$^5$ : **C08F 8/44,** C08F 210/02,
// (C08F210/02, 220:04)

(21) Anmeldenummer : **89111191.6**

(22) Anmeldetag : **20.06.89**

(54) Verfahren zur Herstellung von ionisch vernetzten Ethylencopolymerisaten.

(30) Priorität : **30.06.88 DE 3822067**

(43) Veröffentlichungstag der Anmeldung :
**10.01.90 Patentblatt 90/02**

(45) Bekanntmachung des Hinweises auf die
Patenterteilung :
**27.05.92 Patentblatt 92/22**

(84) Benannte Vertragsstaaten :
**AT BE DE ES FR GB NL**

(56) Entgegenhaltungen :
**EP-A- 223 182**

(56) Entgegenhaltungen :
**EP-A- 0 178 643**
**EP-A- 0 193 110**
**EP-A- 0 199 011**
**DE-A- 1 745 939**

(73) Patentinhaber : **BASF Aktiengesellschaft
Carl-Bosch-Strasse 38
W-6700 Ludwigshafen (DE)**

(72) Erfinder : **Muehlenbernd, Thomas, Dr.
Siegelsmauer 3a
W-6900 Heidelberg (DE)**
Erfinder : **Hasenbein, Norbert, Dr.
Neuoettinger Strasse 4
W-6716 Dirmstein (DE)**

EP 0 349 826 B1

## Beschreibung

Die Erfindung betrifft ein Verfahren zur Herstellung von ionisch vernetzten Ethylencopolymerisaten [A] durch Neutralisation der entsprechenden Ethylencopolymerisate [B], die 0,1 bis 20 Mol ./. α,ß-ethylenisch ungesättigte Carbonsäuren oder α,ß-ethylenisch ungesättigte Carboxylgruppen liefernde Comonomere einpolymerisiert enthalten, sowie ionisch vernetzte Ethylencopolymerisate nach obigem Verfahren.

Bei derartigen Verfahren werden Ethylencopolymerisate mit ionischen Vernetzungen - sog. Ionomere - erhalten, die besonders geeignet sind für die Herstellung von Folien, von Kabelummantelungen und Haftvermittlern und aus denen auch Produkte für den Spritzgußsektor hergestellt werden können.

Ionomere können bekanntlich dadurch hergestellt werden, daß man Ethylen-Methacrylsäurecopolymerisate mit Natriummethylat in einem Kautschukmahlwerk umsetzt (vgl. US-A-32 64 272). Das beschriebene Verfahren ist aber unwirtschaftlich, da es diskontinuierlich durchgeführt wird. Ein kontinuierliches Verfahren zur Herstellung von Ionomeren durch Copolymerisation von Ethylen mit den Metallsalzen von ungesättigten Carbonsäuren ist in der EP-A-223 182 beschrieben. Die dort verwendeten Metallsalze der ungesättigten Carbonsäuren sind jedoch nur sehr aufwendig darzustellen (vgl. Chem. Abstr. 87, 1977, 5403 q) in einigen Fällen is dies sogar überhaupt nicht möglich (vgl. Am. Dyestuff Rep. 65 (7), [1976], 46-47 und Ind. Eng. Chem. 47, (11), (1955), 2258-2265). Außerdem sind die für die Dosierung der Salze der ungesättigten Carbonsäuren benötigten Lösungsmittelmengen so hoch, daß ihre Reglerwirkung sich störend auf den Polymerisationsprozeß auswirkt. Außerdem muß das Lösungsmittel relativ aufwendig aus dem Produkt wieder entfernt werden.

Ein zweistufiges Verfahren, wie es ebenfalls in der EP-A-223 182 beschrieben ist, führt nicht zum Erfolg, da das verwendete Zinkoxid sich praktisch wie ein Füllstoff verhält. Aus diesen Produkten hergestellte Folien sind sehr inhomogen und stippenreich.

Setzt man zur Neutralisation des Ethylencopolymerisats ein Masterbatch mit Zinkoxid ein, wie es in der EP-A-223 182 beschrieben ist, so bleibt die ionische Vernetzung aus. Das Produkt ist stark stippenhaltig. Man erhält erst eine ionische Vernetzung, wenn Zinkacetat · 2H$_2$O zur Neutralisation eingesetzt wird. Das erhaltene Produkt hat jedoch noch viele Stippen und riecht stark nach Essigsäure. Wäßrige Lösungen von Zinkacetat verursachen im Extruder Korrosion. Das so erhaltene Produkt hat eine braune bis schwarze Farbe.

Ein besonders elegantes Verfahren zur Herstellung von Ionomeren mit verbesserter Produkthomogenität, ist in der EP-A-193 110 beschrieben, wo Ethylenacrylsäurecopolymerisate mit wäßrigen Metallacetatlösungen umgesetzt werden. Der Extruder muß jedoch nach dem beschriebenen Verfahren korrosionsgeschützt und mit mindestens zwei Entgasungsstutzen ausgerüstet sein. Diese Voraussetzungen fehlen bei Austragsextrudern von Hochdruck-polymerisationsanlagen. Außerdem sind die in der Regel kürzer, als die Extruder, die in der EP-A-193 110 als geeignet bezeichnet werden.

Somit bestand die Aufgabe, ein Verfahren zur Neutralisation von Ethylen-Carbonsäure-Copolymerisaten zu finden, bei dem die Neutralisation im üblichen Austragsextruder eines Hochdruckpolymerisationssystems durchgeführt wird, ohne daß Korrosionsprobleme im Extruder auftreten.

Diese Aufgabe wurde gelöst durch Verfahren gemäß Patentansprüchen 1 bis 4.

Als Ethylencopolymerisate [B] kommen Copolymerisate des Ethylens, die 0,1-20 Mol.%, bezogen auf das Copolymerisat, α,ß-ethylenisch ungesättigte Carbonsäuren oder α, ß-ethylenisch ungesättigte Carboxylgruppen liefernde Comonomere einpolymerisiert enthalten, in Frage. Unter α,ß-ethylenisch ungesättigten Carbonsäuren werden dabei die üblichen mit Ethylen copolymerisierbaren Carbonsäuren wie Acrylsäure, Methacrylsäure, Itakonsäure, Maleinsäure oder Fumarsäure verstanden. α,ß-ethylenisch ungesättigte, Carboxylgruppen liefernde Comonomere sind beispielsweise Methylhydrogenmaleinat, Maleinsäureanhydrid, tert.-Butylacrylat etc., d.h. Comonomere, die während oder nach der Polymerisation durch Hydrolyse und/oder Pyrolyse in Carboxylgruppen enthaltende Comonomere umgewandelt werden. Die Ethylencopolymerisate können neben den α,ß-ethylenisch ungesättigten Carbonsäuren bzw. Carboxylgruppen liefernden Comonomeren noch andere mit Ethylen copolymerisierbare Comonomere einpolymerisiert enthalten (vgl. EP-A1-106999). Hierbei kommen insbesondere in Frage Ester der (Meth)acrylsäure, Mono- und Diester der Maleinsäure und Fumarsäure, Amide monoethylenisch ungesättigter Carbonsäuren, insbesondere (Meth) acrylsäureamid sowie N-Mono- und N,N-Dialkylamide der (Meth)acrylsäure. Die Ethylencopolymerisate [B] sind an sich bekannt und beispielsweise in den Literaturstellen GB-A-2 091 745, US-A3 520 861, US-A-3 264 272, GB-A-1 011 981, US-A3 404 134 oder US-A-3 969 434 beschrieben. Auch die entsprechenden Pfropfcopolymerisate sind geeignete Ethylencopolymerisate [B]. Die Schmelzindices der Ethylencopolymerisate [B] liegen im allgemeinen im Bereich von 0,1-500 g/10′ gemessen bei 190°C and 2,16 kp (nach DIN 53 735). Bevorzugt sind Produkte mit einem Schmelzindex von 1-80 g/10′. Die Schemlzpunkte der Ethylencopolymerisate liegen im Bereich von 70 bis 115°C.

Die ionisch vernetzten Ethylencopolymerisate - auch Ionomeren genannt - werden üblicherweise hergestellt durch Umsetzung von Ethylencopolymerisaten [B] mit wäßrigen Metallacetatlösungen. Die Ethylencopolymerisate [D] können gleich den Ethylencopolymerisaten [C] sein, bevorzugt sind aber Ethylencopolymerisate, die einen höheren Säuregehalt als den der Substanzklasse [C] enthalten. Die Umsetzung mit den wäßrigen Metallacetatlösungen wird in einem korrosionsgeschützten Zweiwellenextruder, z.B. ZSK 57 der Firma Werner & Pfleiderer, durchgeführt. Verfahren und geeignete Stähle sind in der EP-A-193 110 genannt.

Völlig geruchlose und stippenfreie Produkte erhält man erst durch eine aufwendige dreistufige Vakuumentgasung. Die drei Entgasungszonen sind durch Stauelemente voneinander getrennt. Die Vakua betrugen 800 mbar, 100 mbar und 10 mbar. Bevorzugt werden 10-90 Mol%, ganz besonders bevorzugt 30-80 Mol% der Carboxylgruppen neutralisiert.

Ionisch vernetzte Ethylencopolymerisate, die durch Zugabe eines Metallsalzes in eine Einzugszone eines Extruders erhalten werden sind so bekannt, daß sich weitere Erläuterungen erübrigen (vgl. z.B. US-A-3 006 029).

Nach dem erfindungsgemäßen Verfahren zur Herstellung eines ionisch vernetzten Ethylencopolymerisats [A] wird die Neutralisation des Ethylencopolymerisats [B] in Abwesenheit eines Lösungsmittels in einem Austragsextruder eines Ethylenhochdruckpolymerisationssystems vorgenommen und es wird als Metallsalz ein Ionomer [C] zugegeben. Nach bevorzugten Verfahren soll die Temperatur im Extruder bei der Neutralisation oberhalb der Schmelzpunkte der Ethylencopolymerisate [A], [B] und [C] liegen; das Ionomer soll in Mengen von 2 bis 30 Gew.%, bezogen auf die Menge des Ethylencopolymerisats [B], zugegeben werden oder das Ionomer [C] soll hergestellt sein aus einem Ethylen-Carbonsäure- oder Ethylencarbonsäureanhydrid -Co-, Pfropfco- bzw. Terpolymerisat und einer wäßrigen Metallacetatlösung.

Unter Neutralisation wird eine 5- bis 100 %ige Umsetzung der Säuregruppen des Ethylencopolymerisats [B] in die entsprechenden Salzgruppen zum ionisch vernetzten Ethylencopolymerisat [A] verstanden. Bei dieser Umsetzung kann das Ionomer [C] als Granulat oder als Schmelze einer Einzugszone des Extruders zugeführt werden, die Anwesenheit eines Lösungsmittels - wie sonst gemäß Stand der Technik vielfach üblich - is nicht erforderlich. Als Austragsextruder einer Ethylenhochdruckpolymerisations- anlage werden die für diesen Zweck üblichen Extruder verwendet, die keine besonderen Korrosionsschutzvorkehrungen aufweisen. Derartige Austragsextruder sind allgemein bekannt und z.B. in der Literaturstelle D. Anders, Kunststoffe 1975, 65 (7), 396-400, beschrieben. Als Austragsextruder wird bevorzugt ein Produktionsaustragsextruder ZSK 120 der Firma Werner & Pfleiderer benutzt. Als eine Einzugszone wird bevorzugt eine zweite Einzugszone des Extruders benutzt, während in die erste Einzugszone das Ethylencopolymerisat [B] eindosiert wird.

Bevorzugt herrscht im Extruder bei der Neutralisation eine Temperatur in der Mischzone, die oberhalb der Schmelztemperatur der Ethylencopolymerisate [A] und [C] liegt. Im allgemeinen wird ein Temperaturbereich von 140 bis 320°C eingehalten.

Das Ionomer [C] wird dem Austragsextruder in Mengen von 2 bis 30, insbesondere 5 bis 10 Gew.%, bezogen auf die Menge des Ethylencopolymerisats [B], zugegeben. Das Ionomer [C] wird hergestellt aus einem üblichen Ethylencarbonsäure- oder Ethylencarbonsäureanhydrid- Co-, Pfropfco-bzw. Terpolymerisat [D] durch Umsetzen mit einer wäßrigen Metallacetatlösung (vgl. z.B. EP-A-193 110). Es kommen für die Herstellung des Ionomeren [C] aber auch andere übliche Verfahren in Betracht (vgl. z.B. EP-A-199 011). Das Ionomer [C] ist bevorzugt hochneutralisiert und besteht aus einem Carboxylgruppen enthaltendem Ethylencopolymerisat, das 99 Mol% vollständig neutralisierte Carboxylgruppen enthält.

Es ist ein Vorteil des erfindungsgemäßen Verfahrens, daß die Neutralisation zum ionisch vernetzten Ethylencopolymerisat [A] in Austragsextrudern von Hochdruckpolymerisationsanlagen vorgenommen werden können, wobei die Extruder nicht gegen Korrosion aufwendig geschützt sein müssen.

Ein weiterer Vorteil der Erfindung ist darin zu sehen, daß aus dem erhaltenen Produkt stippenfreie Folien mit hervorragenden Festigkeitseigenschaften und Transparenz; gute Haftvermittler gegenüber polaren Substraten wie Metallen, Polyamid, Glas, partiell verseiften Ethylen-Vinylacetat-Copolymerisaten; Materialien für Kabelummantelungen und Produkte für den Spritzgußsektor hergestellt werden können. Es ist auch von Vorteil, daß die erhaltenen ionisch vernetzten Ethylenpolymerisate völlig geruchlos sind und daß Korrosionsprobleme im Austragsextruder nicht auftreten.

Beispiel 1

Herstellung des Ionomeren [C]

Auf einem korrosionsgeschützt ausgerüsteten Zweiwellen-Schnecken-Kneter ZSK 57 der Firma Werner & Pfleiderer wurden pro Stunde 50 gg BASF Lucalen A 3510 MX (ein Ethylen-Acrylsäure-Copolymerisat mit 6,5 Gew.% einpolymerisierter Acrylsäure) mit 20 kg einer 20 gew.%igen wäßrigen Zinkacetatlösung bei 220°C neutralisiert. Der Extruder war mit drei Entgasungsstufen ausgerüstet, an die ein Vakuum von 800, 100 bzw. 10 mbar angelegt wurde. Der Einzug des Extruders wurde mit Stickstoff im Gegenstrom gegen eindringende

EP 0 349 826 B1

Luft abgesperrt.

Das nach Konfektionierung erhaltene Granulat wies eine hohe Transparenz, einen Zinkgehalt von 2,5 Gew.% und einen Neutralisationsgrad von 80 Mol% auf. Das Produkt war völlig geruchlos, und lieferte eine gute Folienqualität, frei von Stippen.

Beispiel 2:

In den zweiten Feststoffeinzug eines Produktionsaustragsextruders ZSK 120 wurden pro Stunde 32 kg des gemäß Beispiel 1 hergestellten, hochneutralisierten Ionomeren eingetragen und bei 220°C mit 550 kg eines Terpolymeren mit 1 Gew.% Acrylsäure und 2 Gew.% n-Butylacrylat zur Reaktion gebracht. Das erhaltene Produkt zeigt eine hohe mechanische Festigkeit. Der Zinkgehalt wurde zu 0.13 Gew.% bestimmt und damit ergab sich ein Neutralisationsgrad von 27 %. Messungen des Dart Drop zeigten eine Zunahme von 160 auf 480.

Vergleichsbeispiel 1

35 kg eines vorbereiteten Masterbatchs aus 100 kg Lucalen A 3510 MX (Ethylencopolymerisat mit 6,5 Gew.% einpolymerisierter Acrylsäure) und 2,9 kg Zinkoxid wurden je Stunde in den zweiten Feststoffeinzug eines Produktions-Austragsextruders ZSK 120 gegeben und mit 600 kg eines Ethylen/n-Butylacrylat/Acrylsäure-Terpolymeren (2 Gew.% n-BA, 1 Gew.% AS) zur Reaktion gebracht. Das Ausbleiben einer ionischen Vernetzung wurde an der fehlenden MFI-Abnahme deutlich. Der Dart Drop sank gegenüber dem Ausgangsmaterial ab und die Folien wiesen zahlreiche Stippen und Stippenketten auf.

Vergleichsbeispiel 2

Pro Stunde wurden zu 600 kg eines Ethylen-Acrylsäure-n-Butylacrylat-Terpolymeren (2 Gew.% n-Butylacrylat, 1 Gew.% Acrylsäure) 13 kg einer 20 gew.%igen Zinkacetatlösung in eine Zone reduzierten Druckes des Austragsextruders ZSK 120 eingespeist und zur Reaktion gebracht. Beim Zuschalten der Zinkacetatdosierung nahm das zuvor farblose Granulat eine tiefbraune Färbung an. Messungen des Eisengehaltes (2.500 ppm) bestätigten das Austreten von Korrosion des Extrudermaterials. Daher wurde der Versuch sofort abgebrochen.

**Patentansprüche**

1. Verfahren zur Herstellung von ionisch vernetzten Ethylencopolymerisaten [A], durch Neutralisation der entsprechenden Ethylencopolymerisate [B], die 0,1 bis 20 Mol% $\alpha,\beta$-ethylenisch ungesättige Carbonsäuren oder $\alpha,\beta$-ethylenisch ungesättige Carboxylgruppen liefernde Comonomere einpolymerisiert enthalten, unter Zugabe eines Metallsalzes in eine Einzugszone eines Extruders, dadurch gekennzeichnet, daß die Neutralisation in Abwesenheit eines Lösungsmittels in einem Austragsextruder eines Ethylenhochdruckpolymerisationssystems erfolgt und daß als Metallsalz ein Ionomer [C] zugegeben wird.

2. Verfahren nach Anspruch 1, dadurch gekennzeichnet, daß die im Extruder bei der Neutralisation herrschende Temperatur oberhalb der Schmelzpunkte der Copolymerisate [A], [B], [C] liegt.

3. Verfahren nach Anspruch 1, dadurch gekennzeichnet, daß das Ionomer [C] in Mengen von 2 bis 30 Gew.%, bezogen auf die Menge des Ethylencopolymerisats [B], zugegeben wird.

4. Verfahren nach Anspruch 1, dadurch gekennzeichnet, daß das Ionomer [C] hergestellt ist aus einem Ethylen-Carbonsäure- oder Ethylen-Carbonsäureanhydrid- Co-, Pfropfco- bzw. Terpolymerisat [D] und einer wäßrigen Metallacetatlösung.

**Claims**

1. A process for the preparation of an ionically crosslinked ethylene copolymer [A] by neutralizing the corresponding ethylene copolymer [B] which contains, as copolymerized units, from 0.1 to 20 mol % of $\alpha,\beta$-ethylenically unsaturated carboxylic acids or $\alpha,\beta$-ethylenically unsaturated comonomers which donate carboxyl groups, with the addition of a metal salt to a feed zone of an extruder, wherein the neutralization is carried out in the absence of a solvent in an extruder of an ethylene high pressure polymerization system, and the metal salt added is an ionomer [C].

2. A process as claimed in claim 1, wherein the temperature in the extruder during the neutralization is above the melting points of the copolymers [A], [B] and [C].

3. A process as claimed in claim 1, wherein the ionomer [C] is added in amounts of from 2 to 30% by weight, based on the amount of the ethylene copolymer [B].

4. A process as claimed in claim 1, wherein the ionomer [C] is prepared from an ethylene/carboxylic acid or ethylene/carboxylic anhydride copolymer, graft copolymer or terpolymer [D] and an aqueous metal acetate solution.

**Revendications**

1. Procédé de préparation de copolymères d'éthylène réticulés ioniquement [A], par neutralisation des copolymères d'éthylène correspondants [B] qui contiennent en liaison polymère 0,1 à 20% en moles d'acides carboxyliques α,β-insaturés éthyléniquement ou de comonomères fournissant des groupements carboxyle α,β-insaturés éthyléniquement, avec addition d'un sel métalliques dans une zone d'alimentation d'une extrudeuse, caractérisé en ce que la neutralisation est effectuée en l'absence de solvant dans une extrudeuse de sortie d'un système de polymérisation d'éthylène sous haute pression, et en ce qu'un ionomère [C] est ajouté en tant que sel métallique.

2. Procédé selon la revendication 1, caractérisé en ce que la température qui règne dans l'extrudeuse lors de la neutralisation se situe au-dessus des points de fusion des copolymères [A], [B] et [C].

3. Procédé selon la revendication 1, caractérisé en ce que l'ionomère [C] est ajouté dans des proportions de 2 à 30% en poids par rapport à la quantité du copolymère d'éthylène [B].

4. Procédé selon la revendication 1, caractérisé en ce que l'ionomère [C] est préparé à partir d'un copolymère, d'un copolymère greffé ou d'un terpolymère éthylène/acide carboxylique ou éthylène/anhydride carboxylique [D] et d'un solution aqueuse d'acétate de métal.